# FASCICULE DE BREVET EUROPEEN

(11) **EP 0 664 183 B1**
(45) Date de publication et mention de la délivrance du brevet: **23.04.1997**
(21) Numéro de dépôt: 94402999.0
(22) Date de dépôt: 22.12.1994
(51) Int. Cl.: B23K 26/00, B23K 37/04

(54) **Dispositif de mise en référence bord à bord d'au moins deux flans de tôle dans une installation de soudage par faisceau à haute densité d'énergie**
Vorrichtung zum Stumpfaneinanderstossen von wenigstens zwei Blechplatten in einer Einrichtung zum Schweissen mit einem Strahl von hoher Energiedichte
Device for making butt-joints of at least two panels of sheet metal in an installation for welding with an energy beam of high density

(30) Priorité: 20.01.1994 FR 9400597
(43) Date de publication de la demande: 26.07.1995
(73) Titulaire: SOLLAC, F-92800 Puteaux (FR)
(72) Inventeur: Peru, Gilles, F-59240 Dunkerque (FR); Le Roy, Yvon, F-59940 Le Doulieu (FR); Sion, Charles, F-59133 Camphin-en-Carembault (FR); Metsue, Emmanuel, F-59760 Grande-Synthe (FR); Vergnier, Gabriel, F-62500 Boisdinghem (FR)
(74) Mandataire: Lanceplaine, Jean-Claude

(56) Documents cités:
- EP-A- 0 482 223
- EP-A- 0 494 345

## Description

La présente invention a pour objet un dispositif de mise en référence bord à bord d'au moins deux flans de tôle dans une installation de soudage de ces flans de tôle au moyen d'un faisceau à haute densité d'énergie.

Le soudage au moyen d'un faisceau à haute densité d'énergie d'au moins deux flans de tôle a trouvé un débouché industriel important notamment dans la production de pièces raboutées et soudées, par exemple pour l'industrie automobile.

En effet, les flans de tôle raboutés, c'est à dire assemblés bord à bord sans recouvrement et soudés au moyen d'un faisceau à haute densité d'énergie, conservent toute leur faculté d'emboutissabilité.

Les flans de tôle peuvent être de différentes formes géométriques et/ou de différentes épaisseurs, voire posséder des nuances d'acier différentes.

Pour réaliser un raboutage et un soudage corrects au moyen d'un faisceau à haute densité d'énergie de deux flans de tôle afin que la capacité d'emboutissage des flans de tôle soudés reste optimale, il est nécessaire que les flans de tôle à souder soient disposés avec leurs bords l'un contre l'autre sans interstices et dans le cas de flans de tôle de différentes formes, il faut que leur positionnement longitudinal l'un par rapport à l'autre soit parfait.

De plus, il est indispensable d'assurer, d'une part, un positionnement latéral parfait des flans de tôle afin que le plan de joint des deux flans de tôle se situe dans l'axe du faisceau à haute densité d'énergie et, d'autre part, un maintien en référence longitudinal et latéral desdits flans de tôle pour conserver le plan de joint dans l'axe du faisceau à haute densité d'énergie.

Par ailleurs, le soudage bord à bord d'au moins deux flans de tôle au moyen d'un faisceau à haute densité d'énergie demande de très hautes exigences de précision, de forme et de position desdits flans de tôle à souder.

En effet, la qualité du joint à souder dépend en partie de la précision dans la position des flans de tôle et dans la qualité du contact au niveau du plan de joint entre lesdits flans de tôle.

Si la qualité du contact au niveau du plan de joint est incorrect, c'est à dire si le jeu est trop important, il arrive que le joint soudé présente un effondrement, voire même des trous, le joint soudé n'étant pas continu dans ce cas.

Pour assurer un jeu minimal au niveau du plan de joint des flans de tôle afin d'obtenir une bonne qualité du joint soudé, on peut améliorer la qualité du cisaillage des tôles afin de limiter les ondulations des arêtes de coupe et d'assurer un meilleur contact des flans de tôle entre eux pour mieux maîtriser ce jeu entre lesdits flans de tôle.

Mais, pour obtenir un tel résultat, il est nécessaire d'investir dans des cisailles très précises, de coût important ou d'utiliser des cisailles doubles permettant de couper simultanément avec la même lame, les deux flans de tôle à rabouter.

On peut également exercer une pression latérale sur les flans de tôle, dirigée vers le plan de joint desdits flans de tôle afin d'écraser les crêtes des ondulations des arêtes de coupe des bords à souder.

Cette dernière solution est de plus en plus utilisée dans les installations industrielles de soudage au moyen d'un faisceau à haute densité d'énergie.

A cet effet, on connaît des installations industrielles, dites dynamiques, qui permettent la réception des flans de tôles, le positionnement desdits flans de tôle l'un par rapport à l'autre et par rapport à l'axe du faisceau à haute densité d'énergie, et cela pendant leur déplacement en direction dudit faisceau, puis qui permettent de conserver cette mise en référence pendant leur déplacement et d'assurer le soudage des flans de tôle et leur évacuation.

On connaît également des installations industrielles, dites statiques, dans lesquelles les flans de tôle positionnés bord à bord sont fixes et l'ensemble de soudage est mobile le long du plan de joint à souder desdits flans de tôle.

D'une manière générale, ces installations dites statiques comportent des moyens de positionnement selon un plan de référence horizontal et de serrage du premier flan de tôle et des moyens de positionnement selon ledit plan de référence horizontal et de serrage du second flan de tôle, voir par exemple EP-A1-0 482 223.

Ces moyens de positionnement et de serrage sont le plus souvent constitués par des mors de serrage qui pincent les flans de tôle le plus près possible du joint à souder, c'est à dire à quelques millimètres de ce joint à souder.

La place entre les mors de serrage, de part et d'autre du joint à souder, est donc très faible.

Pour la mise en référence des bords à souder du flan de tôle, on utilise, dans ce type d'installations dites statiques, des aiguilles ou des ergots.

Les ergots ou les aiguilles se déforment sous les contacts répétés des flans de tôle, venant au contact pour la mise en référence.

De plus, ces aiguilles ou ces ergots installés souvent dans la zone parcourue par le faisceau à haute densité d'énergie, sont très rapidement dégradés par ce faisceau, même s'ils sont à une distance sous le joint soudé qui devrait normalement les protéger de la puissance du faisceau à haute densité d'énergie.

La dégradation de ces aiguilles ou de ces ergots provient des projections des scories incandescentes dues en particulier au soufflage des gaz de soudage.

L'invention a pour but d'éviter ces inconvénients en proposant un dispositif de mise en référence bord à bord d'au moins deux flans de tôle dans une installation de soudage de ces flans de tôle au moyen d'un faisceau à haute densité d'énergie, qui offre la particularité de permettre une grande précision de référence malgré les efforts de contact importants et répétés.

L'invention a pour objet un dispositif de mise en référence bord à bord d'au moins deux flans de tôle dans une installation de soudage de ces flans de tôle au moyen d'un faisceau à haute densité d'énergie, du type comprenant :
- des moyens de positionnement selon un plan de référence horizontal et de serrage du premier flan de tôle,
- des moyens de positionnement selon ledit plan de référence horizontal et de serrage du second flan de tôle, déplaçables perpendiculairement au plan de joint des flans de tôle,
- et un ensemble de soudage par faisceau à haute densité d'énergie,
- et un organe de butée longitudinal escamotable situé au-dessous et entre les moyens de positionnement et de serrage des flans de tôle
caractérisé en ce que l'organe de butée est déplaçable, d'une part, sous l'action d'un premier moyen de commande, entre une première position horizontale escamotée et une seconde position intermédiaire verticale escamotée et, d'autre part, sous l'action d'un second moyen de commande, entre ladite seconde position intermédiaire et une troisième position verticale de mise en référence du premier flan de tôle dans laquelle la partie inférieure de cet organe de butée est pincée entre lesdits moyens de positionnement et de serrage des flans de tôle et la partie supérieure d'extrémité dudit organe de butée s'étend au-dessus du plan de référence horizontal pour le positionnement du bord à souder du premier flan de tôle dans l'axe du faisceau à haute densité d'énergie.

Selon d'autres caractéristiques de l'invention :
- l'organe de butée est formé par une réglette de longueur sensiblement égale à la longueur des bords à souder des flans de tôle, reliée à un support par des biellettes de liaison articulées à chacune de leurs extrémités, d'une part, sur la réglette et, d'autre part, sur le support,
- le support est formé par une barre longitudinale s'étendant au-dessous de la réglette et montée à chaque extrémité sur un châssis par l'intermédiaire d'un axe horizontal parallèle au plan de joint des bords à souder des flans de tôle, ladite barre étant déplaçable sous l'action du premier moyen de commande entre une première position horizontale et une seconde position verticale,
- le premier moyen de commande comprend au moins un vérin double effet dont la tige de piston est reliée à l'un desdits axes horizontaux par une biellette,
- la face latérale de la partie inférieure de l'organe de butée destinée à coopérer avec les moyens de positionnement du premier flan de tôle possède un profil conjugué au profil desdits moyens de positionnement,
- le second moyen de commande comprend au moins un vérin double effet comportant un corps monté articulé sur le support et une tige de piston dont l'extrémité libre est montée articulée sur l'une des biellettes de liaison en un point situé à proximité de l'articulation entre ladite biellette et la réglette,
- le dispositif comporte des moyens de protection de l'organe de butée montés sur la face du support disposée en regard du faisceau à haute densité d'énergie dans la première position horizontale escamotée de l'organe de butée,
- les moyens de protection de l'organe de butée sont formés par des tronçons de briques en matériau réfractaire,
- la largeur des briques en matériau réfractaire est supérieure à la largeur du faisceau à haute densité d'énergie réfléchi sur lesdites briques en l'absence de flans de tôle dans les moyens de positionnement et de serrage, ledit faisceau étant focalisé sur les flans de tôle dans les conditions de soudage,
- la largeur des briques en matériau réfractaire est comprise entre 50 et 70mm,
- la face supérieure des briques en matériau réfractaire est usinée en forme de cuvette,
- les tronçons de briques en matériau réfractaire s'étendent sur une longueur au moins égale à la longueur de l'organe de butée.

Les caractéristiques et avantages de l'invention apparaîtront au cours de la description qui va suivre, donnée à titre d'exemple, faite en référence aux dessins annexés, sur lesquels :
- la Fig. 1 est une vue schématique en coupe transversale d'une installation de soudage d'au moins deux flans de tôle munie du dispositif de mise en référence selon l'invention, en position escamotée,
- la Fig. 2 est une vue schématique de face du dispositif de mise en référence selon l'invention en position active,
- les Figs 3 et 4 sont des vues schématiques en coupe transversale d'une installation de soudage montrant les différentes positions du dispositif de mise en référence selon l'invention.

L'installation représentée schématiquement sur les figures, est destinée au positionnement bord à bord et au soudage au moyen d'un faisceau à haute densité d'énergie 1, comme par exemple un faisceau laser, d'au moins deux flans de tôle 2 et 3 de différentes formes géométriques et/ou de différentes épaisseurs, voire de différentes nuances d'acier, par exemple pour l'industrie automobile.

Dans l'exemple de réalisation décrit ci-après, l'installation est destinée au positionnement bord à bord et au soudage de deux flans de tôle 2 et 3, le bord à souder 3a du flan de tôle 3 étant appliqué sur le bord à souder 2a du flan de tôle 2.

Dans ce but, l'installation représentée schématiquement sur les figures comprend :
- une table latérale 5 de support du flan de tôle 2,
- une table latérale 6 de support du flan de tôle 3,
- des moyens 10 de positionnement du flan de tôle 2 selon un plan de référence horizontal,
- des moyens 30 de maintien du bord à souder 2a du flan de tôle 2 dans l'axe du faisceau laser 1,
- des moyens 40 de serrage du flan de tôle 2,
- des moyens 50 de support et de positionnement du flan de tôle 3 selon ledit plan de référence horizontal,
- des moyens 60 de maintien du bord à souder 3a du flan de tôle 3 contre le bord à souder 2a du flan de tôle 2,
- des moyens 70 de serrage du flan de tôle 3,
- des moyens 80 de mise en pression latérale des bords à souder 2a et 3a des flans de tôle 2 et 3,
- un dispositif 90 de mise en référence du bord à souder 2a du premier flan de tôle 2 dans l'axe du faisceau laser 1,
- et un ensemble de soudage par faisceau laser 1.

Les moyens 10 de positionnement du premier flan de tôle 2 sont formés par au moins un patin inférieur 11 fixe, en appui sur une table support 12 et s'étendant parallèlement au plan de joint des flans de tôles 2 et 3.

Ce patin inférieur 11 forme une surface de contact continu avec la face inférieure du flan de tôle 2.

Le patin inférieur 11 est en appui par sa face latérale 11a opposée à celle 11b en regard du plan de joint des flans de tôle 2 et 3, sur au moins une butée 13 solidaire de la table support 12 et constituée par exemple par des galets.

Cette butée 13 permet d'éviter le glissement du patin inférieur 11 selon une direction perpendiculaire au plan de joint des flans de tôle 2 et 3 lorsqu'une pression latérale est exercée sur lesdits flans de tôle 2 et 3, comme on le verra ultérieurement.

Les moyens 30 de maintien du bord à souder 2a du flan de tôle 2 dans l'axe du faisceau laser 1 sont formés par au moins un patin supérieur 31 déplaçable verticalement et s'étendant parallèlement au plan de joint des flans de tôle 2 et 3.

Ce patin supérieur 31 forme une surface de contact continu avec la face supérieure du flan de tôle 2 et est disposé en regard du patin inférieur 11.

Le patin inférieur 11 et le patin supérieur 31 peuvent être remplacés par plusieurs patins juxtaposés formant des surfaces de contact sensiblement continue avec le flan de tôle 2.

Les moyens 40 de serrage du premier flan de tôle sont formés par au moins un vérin 41 destiné à exercer sur le patin supérieur 31 une pression verticale pour serrer le flan de tôle 2 entre ce patin supérieur 31 et le patin inférieur 11.

Le vérin 41 comporte un corps 41a supporté par une poutre 42 s'étendant parallèlement au patin supérieur 31 et une tige 41b déplaçable verticalement et solidaire du patin supérieur 31.

Le patin supérieur 31 est en appui par sa face latérale 31a opposée à celle 31b en regard du plan de joint des flans de tôle 2 et 3, sur au moins une butée 32 solidaire de la poutre 42 et constituée par exemple par des galets.

Cette butée 32 évite le glissement du patin supérieur 31 lorsqu'une pression latérale est exercée sur les flans de tôle 2 et 3.

L'ensemble constitué par la poutre 42, le vérin 41, le patin supérieur 31 et la butée 32 peut être monté déplaçable verticalement ou pivotant de façon à pouvoir permettre le positionnement du flan de tôle 2 sur le patin inférieur 11.

Les moyens 50 de positionnement du flan de tôle 3 sont formés par au moins un patin inférieur 51 formant une surface de contact sensiblement continu avec la face inférieure du flan de tôle 3.

Ce patin inférieur 51 s'étend parallèlement aux flans de tôle 2 et 3.

D'autre part, le patin inférieur 51 est monté déplaçable sur une table support 52, selon une direction perpendiculaire au plan de joint des flans de tôle 2 et 3.

A cet effet, le patin inférieur 51 comporte deux pions 53 en saillie par rapport à sa surface inférieure.

Chaque pion 53 pénètre dans une lumière 54 ménagée dans la table support 52 de façon à assurer le guidage du patin inférieur 51 lors de son déplacement transversal par rapport au plan de joint des flans de tôle 2 et 3.

Les moyens 60 de maintien du bord à souder 3a du flan de tôle 3 contre le bord à souder 2a du flan de tôle 2 sont formés par au moins un patin supérieur 61 formant une surface de contact sensiblement continu avec la face supérieure du flan de tôle 3.

Ce patin supérieur 61 s'étend parallèlement au plan de joint des flans de tôle 2 et 3 et est disposé en regard du patin inférieur 51.

Le patin supérieur 61 est déplaçable, d'une part, verticalement, et d'autre part, perpendiculairement au plan de joint des flans de tôle 2 et 3.

Les moyens 70 de serrage du flan de tôle 3 sont formés par au moins un vérin 71 associé au patin supérieur 61.

Le vérin 71 est destiné à exercer sur le patin supérieur 61, une pression verticale déterminée de façon à serrer le flan de tôle 3 entre le patin supérieur 61 et le patin inférieur 51.

Chaque vérin 71 comporte un corps 71a supporté par une poutre 72 s'étendant parallèlement au patin supérieur 61 et une tige 71b déplaçable verticalement et reliée au patin supérieur 61 par un organe de liaison formé par une béquille 73 en forme de "V".

Cette béquille 73 comporte une première extrémité 73a montée articulée sur l'extrémité libre de la tige 71b du vérin 71 par l'intermédiaire d'un trou oblong 74 ménagé dans ladite béquille et une seconde extrémité 73b montée pivotante sur la poutre 72 supportant le vérin 71.

La béquille 73 comporte également un axe d'articulation 75 situé entre les extrémités 73a et 73b de la béquille 73 et munie d'un galet 67 disposé dans une lumière 77 ménagée dans une chape 78 solidaire du patin supérieur 61.

L'ensemble constitué par la poutre 72, le vérin 71, la béquille 73, le patin supérieur 61 peut être relevé ou monté pivotant de façon à soulever le patin supérieur 61 pour pouvoir positionner le flan de tôle 3 sur le patin inférieur 51.

Les moyens 80 de mise en pression latérale des bords à souder 2a et 3a des flans de tôle 2 et 3 sont formés par au moins un vérin 81 associé au patin inférieur 51.

Le vérin 81 est destiné à exercer sur le patin inférieur 51 une pression déterminée et dirigée selon une direction perpendiculaire au plan de joint des flans de tôle 2 et 3.

Le vérin 81 comporte une tige 82 déplaçable horizontalement et reliée au patin inférieur 51 par au moins un pion 83 qui traverse la table support 52.

Le dispositif 90 de mise en référence, selon l'invention, comprend un organe de butée longitudinale désigné dans son ensemble par la référence 91.

Cet organe de butée longitudinal 91 est situé au-dessous des patins inférieurs 11 et 51 et des moyens de positionnement et de serrage des flans de tôle 2 et 3.

Cet organe de butée 91 est formé par une réglette 92 de longueur sensiblement égale à la longueur des bords à souder 2a et 3a des flans de tôle 2 et 3.

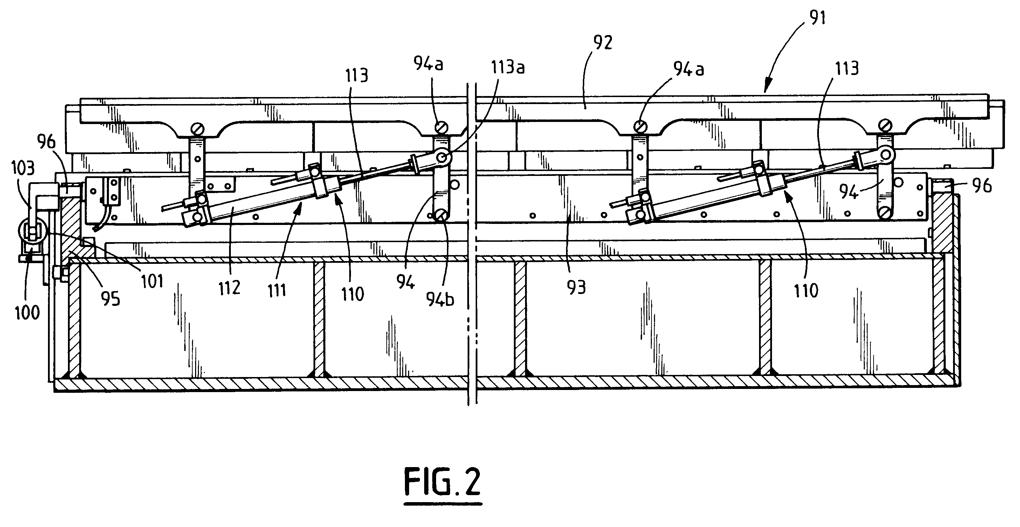

La réglette 92 est reliée à un support 93 par des biellettes de liaison 94 (Fig. 2).

Les biellettes de liaison 94 sont articulées par l'une 94a de leurs extrémités sur la réglette 92 et par l'autre 94b desdites extrémités sur le support 93.

Ce support 93 est formé par une barre longitudinale s'étendant au-dessous de la réglette 92 et montée articulée à chaque extrémité sur un châssis 95 par l'intermédiaire d'un axe horizontal 96 parallèle au plan de joint des bords à souder 2a et 3a des flans de tôle 2 et 3.

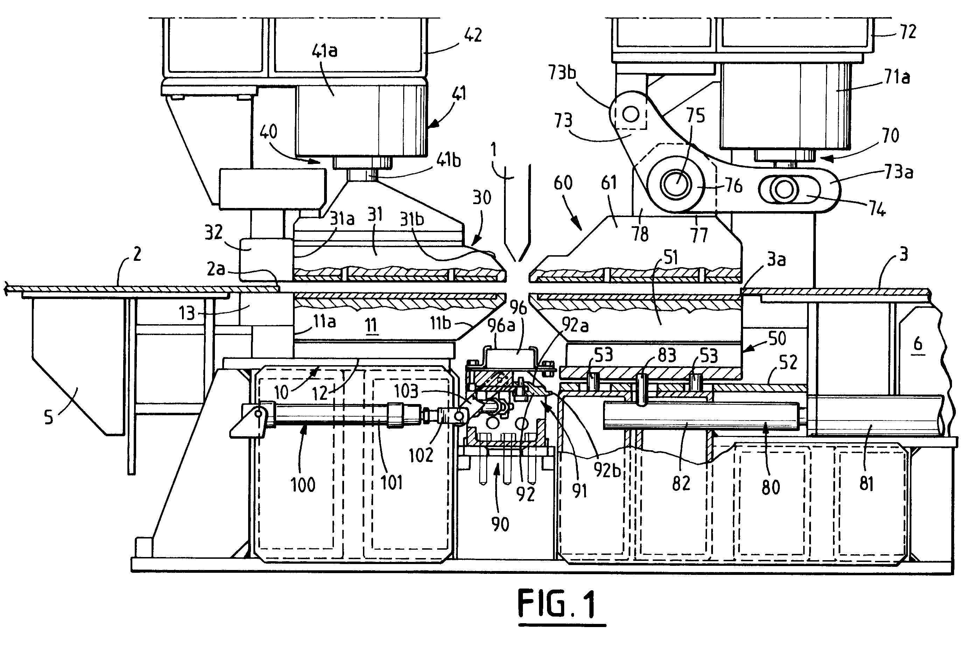

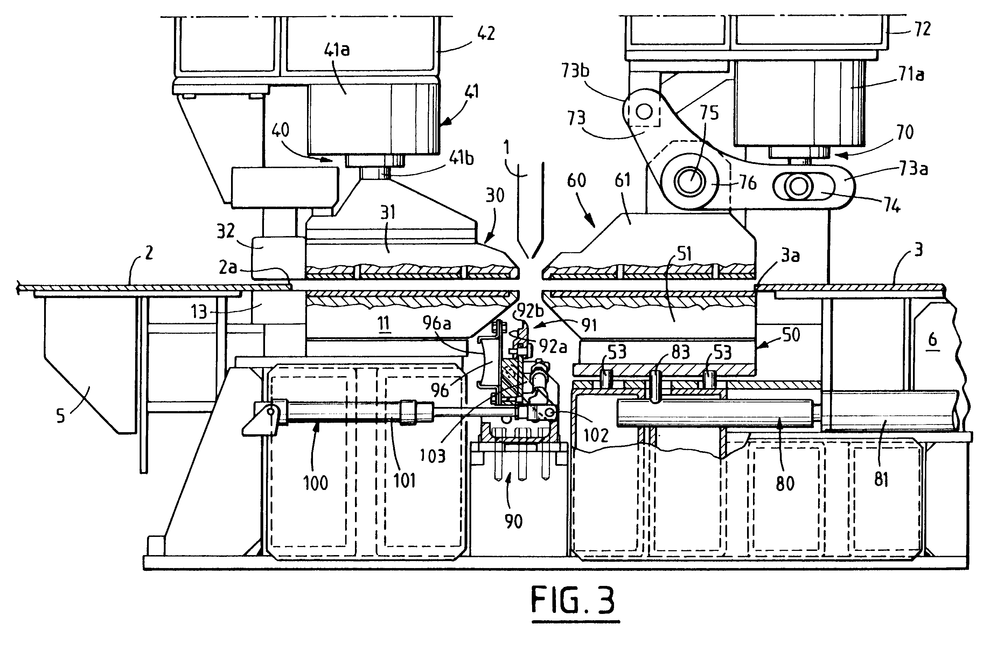

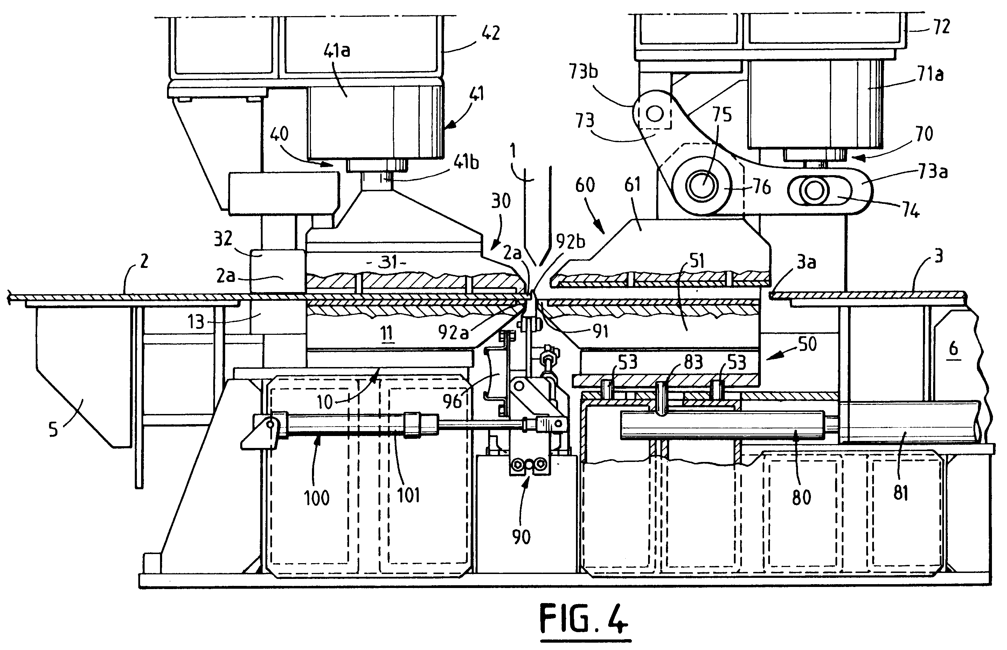

La réglette 92 est déplaçable, d'une part, sous l'action d'un premier moyen de commande 100 entre une première position horizontale escamotée (Fig. 1) et une seconde position intermédiaire verticale escamotée (Fig. 3) et, d'autre part, sous l'action d'un second moyen de commande 110, entre la dite seconde position intermédiaire et une troisième position verticale (Fig. 4) de mise en référence du bord à souder 2a du premier flan de tôle 2 dans l'axe du faisceau laser 1.

D'autre part, la barre 93 est également déplaçable sous l'action du premier moyen de commande 100 entre une première position horizontale et une seconde position verticale.

Le premier moyen de commande 100 comprend au moins un vérin 101 double effet dont la tige de piston 102 est reliée à l'un des axes horizontaux 96 par une biellette 103.

Le second moyen de commande 110 est formé par plusieurs vérins double effet 111, comme représenté sur la Fig. 2.

Chaque vérin 111 comporte, d'une part, un corps 112 monté articulé sur le support 93 et de préférence sur l'articulation 94b reliant une biellette de liaison 94 avec ledit support 93 et, d'autre part, une tige de piston 113 dont l'extrémité libre 113a est montée articulée sur la biellette de liaison adjacente 94 en un point situé à proximité de l'articulation 94a de ladite biellette 94 sur la réglette 92.

La face latérale de la partie inférieure 92a de la réglette 92 qui est destinée à coopérer avec le patin inférieur 11 lorsque la réglette 92 est en position de mise en référence du bord à souder 2a du premier flan de tôle 2, possède un profil conjugué au profil du bord dudit patin inférieur 11.

Par ailleurs, le dispositif 90 de mise en référence comporte également des moyens de protection de la réglette 92 et du support 93 pendant le soudage des bords 2a et 3a des flans de tôle 2 et 3 afin d'éviter la projection de scories incandescentes sur ladite réglette 92.

Ces moyens de protection sont formés par des tronçons de briques 96 en matériau réfractaire montés sur la face du support 93 disposée en regard du faisceau laser 1 dans la première position horizontale escamotée de la réglette 92 (Fig. 1).

La largeur des briques 96 en matériau réfractaire est supérieure à la largeur du faisceau laser 1 réfléchi sur lesdites briques 96 en l'absence de flans de tôle 2 et 3 entre les patins 11, 31 et 51, 61, ledit faisceau laser 1 étant focalisé sur les flans de tôle 2 et 3 dans les conditions de soudage.

Les tronçons de briques 96 en matériau réfractaire s'étendent sur une longueur au moins égale à la longueur de la réglette 92.

La largeur des briques 96 en matériau réfractaire est comprise entre 50 et 70mm et la face supérieure 96a des briques 96 est usinée en forme de cuvette pour récupérer les scories incandescentes.

L'installation fonctionne de la manière suivante.

Le patin inférieur 11 est fixe et se situe à une distance connue, constante et précise de l'axe du faisceau laser 1.

Tout d'abord la réglette 92 est en position horizontale escamotée, comme représentée à la Fig. 1, et la première phase consiste à ramener ladite réglette 92 en position verticale.

Pour cela, les patins 51 et 61 sont en retrait, comme représenté à la Fig. 1.

La mise en pression du vérin 101 qui agit sur la biellette 103 et sur l'axe horizontal 96, commande le basculement de l'ensemble constitué par le support 93, les biellettes de liaison 94 et la réglette 92 dans la position intermédiaire verticale escamotée, ainsi que représentée sur la fig. 3.

La phase suivante consiste à amener la réglette 92 entre les patins inférieurs 11 et 51.

Pour cela, les vérins 111 sont mis sous pression de telle manière que les tiges de piston 113 de ces vérins 111 provoquent, par l'intermédiaire des biellettes de liaison 94, le basculement de la réglette 92 par rapport au support 93 de façon à amener ladite réglette 92 dans sa position verticale de mise en référence du bord à souder 2a du premier flan de tôle 2.

Dans cette position représentée à la Fig. 4, le déplacement du patin inférieur 51 sous l'action du vérin 81 provoque le pincement de la réglette 92 entre le patin inférieur 11 et le patin inférieur 51.

La partie inférieure 92a de la réglette 92 est donc pincée entre les patins inférieurs 11 et 51 et la partie supérieure d'extrémité 92b de la réglette 92 s'étend au dessus du plan de référence horizontal déterminé par les patins inférieurs 11 et 51.

La réglette 92 étant alors en référence, le premier flan de tôle 2 est introduit entre le patin inférieur 11 et le patin supérieur 31 de telle façon que son bord à souder 2a vienne s appliquer contre la partie supérieure d'extrémité 92b de ladite réglette 92.

Ensuite, le premier flan de tôle 2 est serré entre le patin inférieur 11 et le patin supérieur 31 par l'intermédiaire du vérin 41.

Dès le serrage du premier flan de tôle 1, la réglette 92 est desserrée latéralement par retrait du patin inférieur 51 sous l'action du vérin 81.

Le déserrage de la réglette 92 permet la descente de cette réglette 92 par l'intermédiaire des vérins 111 et des biellettes de liaison 94, puis le basculement de cette réglette 92 et du support 93 par l'intermédiaire du vérin 101, dans la position horizontale escamotée.

La place ainsi libérée entre les patins autorise l'introduction du second flan de tôle 3, opposé au premier flan de tôle 2 déjà mis en référence.

Après l'accostage du second flan de tôle 3 sur le bord 2a du premier flan de tôle 2, le second flan de tôle 3 est serré par la descente du patin supérieur 61 et la mise en pression du vérin 71.

La descente de la tige 71b du vérin 71 provoque le basculement de la béquille 73 autour de son extrémité opposée 73b pour que le galet 67 vienne s'appliquer sur la face supérieure du patin supérieur 61.

Ainsi, le galet 76 exerce sous l'action du vérin 71 et de la béquille 73, une pression sur le patin supérieur 61 de façon à serrer le flan de tôle 3 entre les patins 51 et 61 et à maintenir le bord à souder 3a du flan de tôle 3 contre le bord à souder 2a du flan de tôle 2, c'est à dire dans l'axe du faisceau laser 1.

La béquille 73 permet par effet de levier d'amplifier l'effort exercé sur le flan de tôle 3 par l'intermédiaire du patin supérieur 61.

Cette configuration permet d'engendrer un effort de pression ayant une composante verticale et une composante tangentielle née de l'adhérence et de l'effort vertical, permettant une mise en pression latérale des flans de tôle 2 et 3 à rabouter.

Pour assurer un minimum de jeu entre les bords à souder 2a et 3a des flans de tôles 2 et 3, la tige 82, par la mise en pression du vérin 81, agit, par l'intermédiaire du pion 83, sur le patin inférieur 51 qui se déplace perpendiculairement au plan de joint des flans de tôle 2 et 3 et exerce sur les bords à souder 2a et 3a une pression latérale.

Le déplacement latéral du patin inférieur 11 et du patin supérieur 31 est empêché par les butées, respectivement 13 et 32.

Ensuite, le soudage des bords 2a et 3a est réalisé par le faisceau laser 1.

Pendant le soudage des bords à souder 2a et 3a des flans de tôle 2 et 3, la réglette 92 et le support 93 sont protégés par les briques 96 en matériau réfractaire.

Le dispositif de mise en référence selon l'invention présente l'avantage d'être simple et compact et peut être installé sur des installations de soudage à cycles statiques sur lesquelles le faisceau à haute densité d'énergie se déplace au-dessus des flans de tôle à souder ou sur des installations de soudage à cycles dynamiques dans lesquelles les flans de tôle à souder se déplacent au-dessous du faisceau à haute densité d'énergie.

Le dispositif de mise en référence selon l'invention offre une grande précision de positionnement du joint à souder et la précision et la rigidité sont données par l'ensemble des pièces environnantes existantes pour d'autres fonctions.

De plus, il offre une facilité de maintenance et une protection intégrée aux impacts du faisceau à haute densité d'énergie.

## Revendications

1. Dispositif de mise en référence bord à bord d'au moins deux flans de tôle (2, 3) dans une installation de soudage de ces flans de tôle au moyen d'un faisceau à haute densité d'énergie (1), du type comprenant :
- des moyens de positionnement (10) selon un plan de référence horizontal et de serrage (30, 40) du premier flan de tôle (2),
- des moyens (50) de positionnement selon ledit plan de référence horizontal et de serrage (60, 70) du second flan de tôle (3), déplaçables perpendiculairement au plan de joint des flans de tôle (2, 3),
- et un ensemble de soudage par faisceau à haute densité d'énergie (1),
- et un organe de butée (92) longitudinal escamotable situé au-dessous et entre les moyens (30, 40, 50, 60, 70) de positionnement et de serrage des flans de tôle (2, 3),
caractérisé en ce que l'organe de butée (92) est déplaçable, d'une part, sous l'action d'un premier moyen de commande (100), entre une première position horizontale escamotée et une seconde position intermédiaire verticale escamotée et, d'autre part, sous l'action d'un second moyen de commande (110), entre ladite seconde position intermédiaire et une troisième position verticale de mise en référence du premier flan de tôle (2) dans laquelle la partie inférieure (92a) de cet organe de butée (92) est pincée entre lesdits moyens de positionnement et de serrage des flans de tôle (2, 3) et la partie supérieure d'extrémité (92b) dudit organe de butée (92) s'étend au-dessus du plan de référence horizontal pour le positionnement du bord à souder (2a) du premier flan de tôle (2) dans l'axe du faisceau à haute densité d'énergie (1).

2. Dispositif selon la revendication 1, caractérisé en ce que l'organe de butée est formé par une réglette (92) de longueur sensiblement égale à la longueur des bords à souder (2a, 3a) des flans de tôle (2, 3), reliée à un support par des biellettes de liaison (94) articulées à chacune de leurs extrémités (94a, 94b), d'une part, sur la réglette (92) et, d'autre part, sur le support (93).

3. Dispositif selon la revendication 2, caractérisé en ce que le support (93) est formé par une barre longitudinale s'étendant au-dessous de la réglette (92) et montée articulée à chaque extrémité sur un châssis (95) par l'intermédiaire d'un axe horizontal (96) parallèle au plan de joint des bords à souder (2a, 3a) des flans de tôle (2, 3), ladite barre étant déplaçable, sous l'action du premier moyen de commande (100), entre une première position horizontale et une seconde position verticale.

4. Dispositif selon l'une des revendications 1 à 3, caractérisé en ce que le premier moyen de commande (100) comprend au moins un vérin double effet (101) dont la tige de piston (102) est reliée à l'un desdits axes horizontaux (96) par une biellette (103).

5. Dispositif selon la revendication 1, caractérisé en ce que la face latérale de la partie inférieure (92a) de l'organe de butée (92), destinée à coopérer avec les moyens de positionnement (11) du premier flan de tôle (2) possède un profil conjugué au profil desdits moyens de positionnement.

6. Dispositif selon l'une des revendications 1 à 3, caractérisé en ce que le second moyen de commande (110) comprend au moins un vérin double effet (111) comportant un corps (112) monté articulé sur le support (93) et une tige de piston (113) dont l'extrémité libre (113a) est montée articulée sur l'une des biellettes de liaison (94) en un point situé à proximité de l'articulation (94a) de ladite biellette (94) sur la réglette (92).

7. Dispositif selon l'une des revendications précédentes, caractérisé en ce qu'il comporte des moyens (96) de protection de l'organe de butée (92) montés sur la face du support (93) disposée en regard du faisceau à haute densité d'énergie (1) dans la première position horizontale escamotée de l'organe de butée (92).

8. Dispositif selon la revendication 7, caractérisé en ce que les moyens de protection sont formés par des tronçons de briques (96) en matériau réfractaire.

9. Dispositif selon la revendication 8, caractérisé en ce que la largeur des briques (96) en matériau réfractaire est supérieure à la largeur du faisceau à haute densité d'énergie (1) réfléchi sur lesdites briques (96) en l'absence de flans de tôle (2, 3) dans les moyens de positionnement et de serrage, ledit faisceau étant focalisé sur les flans de tôle (2, 3) dans les conditions de soudage.

10. Dispositif selon les revendications 8 et 9, caractérisé en ce que la largeur des briques (96) en matériau réfractaire est comprise entre 50 et 70mm.

11. Dispositif selon l'une des revendications 8 à 10, caractérisé en ce que la face supérieure (96a) des briques (96) en matériau réfractaire est usinée en forme de cuvette.

12. Dispositif selon l'une des revendications 8 à 11, caractérisé en ce que les tronçons de briques (96) en matériau réfractaire s'étendent sur une longueur au moins égale à la longueur de l'organe de butée (92).

## Claims

1. Apparatus for putting at least two panels of sheet metal (2, 3) in register, edge to edge, in an installation for welding the panels of sheet metal by means of a beam (1) of high density energy, of the type comprising
- means for positioning (10) and clamping (30, 40) the first panel of sheet metal (2) in a horizontal reference plane,
- means (50) for positioning and clamping (60, 70) the second panel of sheet metal (3) in the said horizontal reference plane, being movable perpendicular to the plane of the joint of the panels of sheet metal (2, 3),
- and a high energy density beam welding unit (1),
- and a longitudinal, retractable abutment member (92) located below and between the means (30, 40, 50, 60, 70) for positioning and clamping the panels of sheet metal (2, 3),
characterized in that the abutment member (92) is movable firstly under the action of a first control means (100) between a first, horizontally retracted position and a second, vertically retracted, intermediate position, and secondly under the action of a second control means (110) between the said second, intermediate position and a third vertical position in register with the first panel of sheet metal (2) in which the lower part (92a) of this abutment member (92) is gripped between the said positioning and clamping means for the panels of sheet metal (2, 3) and the upper terminal part (92b) of the said abutment member (92) extends above the horizontal reference plane for positioning the edge to be welded (2a) of the first panel of sheet metal (2) on the axis of the high energy density beam (1).

2. Apparatus according to claim 1, characterized in that the abutment member is formed by a strip (92) of length substantially equal to the length of the edges to be welded (2a, 3a) of the panels of sheet metal (2, 3), attached to a support by connecting links (94) pivoted at each of their ends (94a, 94b) on the one hand to the strip (92) and on the other hand to the support (93).

3. Apparatus according to claim 2, characterized in that the support (93) is formed by a longitudinal bar extending below the strip (92) and pivotally mounted at each end on a frame (95) by means of a horizontal pivot (96) parallel to the plane of the joint of the edges to be welded (2a, 3a) of the panels of sheet metal (2, 3), the said bar being movable under the action of the first control means (100) between a first horizontal position and a second vertical position.

4. Apparatus according to any of claims 1 to 3, characterized in that the first control means (100) comprises at least one double acting actuator (101) of which the piston rod (102) is connected to one of the said horizontal pivots (96) by a link (103).

5. Apparatus according to claim 1, characterized in that the side face of the lower part (92a) of the abutment member (92) adapted to cooperate with the positioning means (11) of the first panel of sheet metal (2) has a profile mating with the profile of the said positioning means.

6. Apparatus according to any of claims 1 to 3, characterized in that the second control means (110) comprises at least one double acting actuator (11) having a body (112) pivotally mounted on the support (93) and a piston rod (113) of which the free end (113a) is pivoted to one of the connecting links (94) at a point located near to the pivot of the said link (94) to the strip (92).

7. Apparatus according to any of the preceding claims, characterized in that it comprises means (96) for protecting the abutment member (92) mounted on the face of the support (93) facing the high energy density beam (1) in the first, horizontally retracted position of the abutment member (92).

8. Apparatus according to claim 7, characterized in that the protection means are formed by sections of bricks (96) of refractory material.

9. Apparatus according to claim 8, characterized in that the width of the bricks (96) of refractory material is greater than the width of the high energy density beam (1) impinging on the said bricks (96) in the absence of the panels of sheet metal (2, 3) in the means for positioning and clamping, the said beam being focused on to the panels of sheet metal (2, 3) under the welding conditions.

10. Apparatus according to claims 8 and 9, characterized in that the width of the bricks (96) of refractory material lies between 50 and 70 mm.

11. Apparatus according to any of claims 8 to 10, characterized in that the upper face (96a) of the bricks (96) of refractory material is shaped in the form of a dish.

12. Apparatus according to any of claims 8 to 11, characterized in that the sections of bricks (96) of refractory material extend over a length at least equal to the length of the abutment member (92).

## Patentansprüche

1. Vorrichtung zum Stumpfaneinanderstoßen von wenigstens zwei Blechplatten (2, 3) in einer Anlage zum Schweißen dieser Blechplatten mit einem Strahl (1) hoher Energiedichte, des Typs, der aufweist:
- Einrichtungen zum Positionieren (10) entlang einer horizontalen Referenzebene und zum Einspannen (30, 40) der ersten Blechplatte (2),
- Einrichtungen (50) zum Positionieren entlang der genannten horizontalen Referenzebene und zum Einspannen (60, 70) der zweiten Blechplatte (3), die senkrecht zu der Teilungsebene der Blechplatten (2, 3) verlagerbar sind,
- und eine Anordnung zum Schweißen mit einem Strahl hoher Energiedichte (1),
- und ein in Langsrichtung verlaufendes Anlageelement (92), das einziehbar oberhalb und zwischen den Einrichtungen (30, 40, 50, 60, 70) zum Positionieren und zum Einspannen der Blechplatten (2, 3) angeordnet ist,
dadurch gekennzeichnet, daß das Anlageelement (92) einerseits unter der Einwirkung einer ersten Steuereinrichtung (100) zwischen einer ersten horizontalen eingezogenen Position und einer zweiten vertikalen eingezogenen Zwischenposition und andererseits unter der Einwirkung einer zweiten Steuereinrichtung (110) zwischen der zweiten Zwischenposition und einer dritten vertikalen Position zum Ausrichten in bezug auf die erste Blechplatte (2) verlagerbar ist, wobei der untere Teil (92a) dieses Anlageelementes (92) zwischen den Einrichtungen zum Positionieren und zum Einspannen der Blechplatten (2, 3) eingeklemmt ist und der obere Endabschnitt (92b) des Anlageelementes (92) sich oberhalb der horizontalen Referenzebene für die Positionierung der Schweißkante (2a) der ersten Blechplatte (2) in die Achse des Strahls mit hoher Energiedichte (1) erstreckt.

2. Vorrichtung nach Anspruch 1, dadurch gekennzeichnet, daß das Anlageelement aus einem Kantel (92) mit einer Länge, die im wesentlichen gleich der Länge der Schweißkanten (2a, 3a) der Blechplatten (2, 3) entspricht, gebildet ist, der mit einem Träger durch Verbindungs-Schwingarme (94) verbunden ist, die an jedem ihrer Enden (94a, 94b) angelenkt sind, einerseits an dem Kantel (92) und andererseits an dem Träger (93).

3. Vorrichtung nach Anspruch 2, dadurch gekennzeichnet, daß der Träger (93) aus einer Längsstange gebildet ist, die sich unterhalb des Kantels (92) erstreckt und an jedem Ende an einem Gestell (95) schwenkbar angebracht ist, durch Zwischenschaltung einer horizontalen Achse (96) parallel zu der Teilungsebene der Schweißkanten (2a, 3a) der Blechplatten (2, 3), wobei die Stange unter der Einwirkung der ersten Steuereinrichtung (100) zwischen einer ersten horizontalen Position und einer zweiten vertikalen Position verlagerbar ist.

4. Vorrichtung nach einem der Ansprüche 1 bis 3, dadurch gekennzeichnet, daß die erste Steuereinrichtung (100) wenigstens ein doppelt wirkendes Stellglied (101) aufweist, dessen Kolbenstange (102) mit einer der horizontalen Achsen (96) über einen Schwingarm (103) verbunden ist.

5. Vorrichtung nach Anspruch 1, dadurch gekennzeichnet, daß die seitliche Fläche des unteren Teiles (92a) des Anlageelementes (92), die dazu bestimmt ist, mit den Einrichtungen zum Positionieren (11) der ersten Blechplatte (2) zusammenzuwirken, ein Profil besitzt, das konjugiert zu dem Profil der Einrichtungen zum Positionieren ist.

6. Vorrichtung nach einem der Ansprüche 1 bis 3, dadurch gekennzeichnet, daß die zweite Steuereinrichtung (110) wenigstens ein doppelt wirkendes Stellglied (111) aufweist, das einen Körper (112), welcher schwenkbar an dem Träger (93) angelenkt ist, und eine Kolbenstange (113), deren freies Ende (113a) schwenkbar an einem der Verbindungs-Schwingarme (94) an einem Punkt angelenkt ist, der sich in der Nähe des Gelenkes (94a) des Schwingarmes (94) auf dem Kantel (92) befindet, umfaßt.

7. Vorrichtung nach einem der vorangehenden Ansprüche, dadurch gekennzeichnet, daß sie Einrichtungen (96) zum Schutz des Anlageelementes (92) aufweist, die auf der Fläche des Trägers (93) angebracht sind, die gegenüber dem Strahl mit hoher Energiedichte (1) in der ersten horizontalen eingezogenen Position des Anlageelementes (92) angeordnet ist.

8. Vorrichtung nach Anspruch 7, dadurch gekennzeichnet, daß die Schutzeinrichtungen durch Steinblöcke (96) aus Feuerfestmaterial gebildet sind.

9. Vorrichtung nach Anspruch 8, dadurch gekennzeichnet, daß die Breite der Steine (96) aus Feuerfestmaterial größer ist als die Breite des Strahles mit hoher Energiedichte (1), der auf den Steinen (96) beim Fehlen der Blechplatten (2, 3) in den Einrichtungen zum Positionieren und zum Einspannen reflektiert wird, wobei der Strahl unter Schweißbedingungen fokussiert auf die Blechplatten (2, 3) ist.

10. Vorrichtung nach den Ansprüchen 8 und 9, dadurch gekennzeichnet, daß die Breite der Steine (96) aus Feuerfestmaterial zwischen 50 und 70 mm liegt.

11. Vorrichtung nach einem der Ansprüche 8 bis 10, dadurch gekennzeichnet, daß die obere Fläche (96a) der Steine (96) aus Feuerfestmaterial in Form einer Mulde gearbeitet ist.

12. Vorrichtung nach einem der Ansprüche 8 bis 11, dadurch gekennzeichnet, daß die Steinblöcke (96) aus Feuerfestmaterial sich über eine Länge erstrecken, die wenigstens gleich der Länge des Anlageelementes (92) ist.
